(19) Europäisches Patentamt
European Patent Office
Office européen des brevets

(11) EP 2 717 139 B1

(12) **EUROPEAN PATENT SPECIFICATION**

(45) Date of publication and mention
of the grant of the patent:
**15.11.2017 Bulletin 2017/46**

(51) Int Cl.:
*G06F 3/0485* (2013.01)          *G06F 3/048* (2013.01)
*G06F 1/16* (2006.01)           *G06F 17/30* (2006.01)
*G09G 5/38* (2006.01)

(21) Application number: **11783036.4**

(22) Date of filing: **30.05.2011**

(86) International application number:
**PCT/CN2011/074875**

(87) International publication number:
**WO 2011/144119 (24.11.2011 Gazette 2011/47)**

(54) **METHOD, DEVICE AND TERMINAL FOR ADJUSTING DISPLAY REGION OF PAGE**

VERFAHREN, VORRICHTUNG UND ENDGERÄT ZUR EINSTELLUNG DES ANZEIGEBEREICHS EINER SEITE

PROCÉDÉ, DISPOSITIF ET TERMINAL POUR AJUSTER LA RÉGION D'AFFICHAGE D'UNE PAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.04.2014 Bulletin 2014/15**

(73) Proprietor: **Huawei Device (Dongguan) Co., Ltd.**
**Dongguan, Guangdong 523808 (CN)**

(72) Inventor: **WANG, Wei**
**Guangdong 518129 (CN)**

(74) Representative: **Isarpatent**
**Patent- und Rechtsanwälte Behnisch Barth Charles**
**Hassa Peckmann & Partner mbB**
**Friedrichstrasse 31**
**80801 München (DE)**

(56) References cited:
**CN-A- 1 855 093          CN-A- 102 033 689**
**US-A1- 2007 211 041      US-A1- 2009 089 705**
**US-A1- 2011 102 455**

## Description

## TECHNICAL FIELD

The present invention relates to the field of communications technologies, and particularly to a method, an apparatus, and a terminal for adjusting a display area of a page.

## BACKGROUND

Recently, a commonly used cell phone has an Internet access function, and a user may browse a web page by using a browser of the cell phone. However, a size of the web page usually exceeds a size of a display screen of the cell phone, which results in that the display screen can only display a small part of the entire web page. In this way, when browsing the web page, the user needs to adjust a display area of the web page, so as to browse the entire web page.

In the prior art, there are the following two methods for adjusting a display area of a web page:

One is that the browser re-typesets the web page, so as to make a width of the web page after the re-typesetting consistent with a width of the display screen. Therefore, the user scrolls the web page up and down by using a navigation key of the cell phone, so as to browse the entire web page. However, by adopting the method, the web page after the re-typesetting is usually modified beyond recognition, the content of which is confusing, which cannot provide good user experience.

The other one is that the web page is controlled to move up and down, left and right in a manner of dragging on a touchscreen, so as to adjust the display area of the web page. By adopting the method, an original appearance of the web page may be kept, but a misoperation may be easily caused. For example, when the web page has many hyperlinks, an operation of dragging the web page may be easily confused with an operation of clicking on the hyperlink, so that an original operation of dragging the web page may become the operation of clicking on the hyperlink.

US 2011/102455 A1 relates to scrolling and zooming of a portable device display with device motion. US 2009/089705 A1 discloses virtual object navigation. US 2007/0211041 A1 provides an electronic device for moving the display position of a screen by a displacement sensor and method thereof.

## SUMMARY

Embodiments of the present invention provide a method, an apparatus, and a terminal for adjusting a display area of a page.

A method for adjusting a display area of a page includes:

> obtaining displacement of a mobile communication terminal from a first time point to a second time point;
obtaining coordinates of a first locating point on a display area of the currently browsed page at the first time point;
obtaining coordinates of a second locating point according to the coordinates of the first locating point and the displacement;
adjusting a display area of the currently browsed page at the second time point according to the coordinates of the second locating point, wherein the display area is displayed on a display screen of the mobile communication terminal;
wherein the obtaining coordinates of a second locating point according to the coordinates of the first locating point and the displacement comprises:

> determining whether new coordinates obtained by subtracting the displacement from the coordinates of the first locating point exceed a locating point coordinate permitted range of the currently browsed page, if not, using the new coordinates as the coordinates of the second locating point; and if yes, additionally determining coordinates as the coordinates of the second locating point;
> wherein the additionally determining coordinates as the coordinates of the second locating point comprises:

>> using coordinates which are closest to the new coordinates and are within the locating point coordinate permitted range as the coordinates of the second locating point; or obtaining coordinates of an intersection point of a connection line of the new coordinates and the coordinates of the first locating point and a border of the locating point coordinate permitted range, and using the coordinates of the intersection point as the coordinates of the second locating point;
>> wherein the first locating point is a point which coincides with a display origin point of a display screen and is on the display area of the currently browsed page at the first time point;
>> wherein the adjusting a display area of the currently browsed page at the second time point according to the coordinates of the second locating point comprises:

>>> placing a position which is represented by the coordinates of the second locating point and is on the currently browsed page at the display origin point of the display screen, so as to implement adjusting the display area of the currently browsed page at the second time point.

An apparatus for adjusting a display area of a page includes:

a displacement obtaining module, configured to obtain displacement of a mobile communication terminal from a first time point to a second time point;

an adjusting module, configured to adjust a display area of a currently browsed page according to the displacement; wherein the adjusting module comprises: a coordinate obtaining unit, configured to obtain coordinates of a first locating point on a display area of the currently browsed page at the first time point;

a calculating unit, configured to obtain coordinates of a second locating point according to the coordinates of the first locating point and the displacement;

an adjusting unit, configured to adjust a display area of the currently browsed page at the second time point according to the coordinates of the second locating point, wherein the display area is displayed on a display screen of the mobile communication terminal;

wherein the calculating unit further comprises: a determining unit, configured to determine whether new coordinates obtained by subtracting the displacement from the coordinates of the first locating point exceed a locating point coordinate permitted range of the currently browsed page;

a first calculating unit, configured to, if the determining unit determines that the new coordinates do not exceed the locating point coordinate permitted range, use the new coordinates as the coordinates of the second locating point; and

a second calculating unit, configured to, if the determining unit determines that the new coordinates exceed the locating point coordinate permitted range, additionally determine coordinates as the coordinates of the second locating point;

the second calculating unit is specifically configured to, if the determining unit determines that the new coordinates exceed the locating point coordinate permitted range, use coordinates which are closest to the new coordinates and are within the locating point coordinate permitted range as the coordinates of the second locating point; or obtain coordinates of an intersection point of a connection line of the new coordinates and the coordinates of the first locating point and a border of the locating point coordinate permitted range, and use the coordinates of the intersection point as the coordinates of the second locating point.

A mobile communication terminal includes a display screen and the apparatus for adjusting a display area of a page.

In the embodiments of the present invention, a technical solution of obtaining the displacement of the mobile communication terminal, and adjusting the display area of the currently browsed page according to the displacement is adopted, so that a user may adjust the display area of the page by moving the mobile communication terminal, so as to solve a problem of a method in the prior art that a mis-operation is easily caused.

**BRIEF DESCRIPTION OF DRAWINGS**

FIG. 1 is a flowchart of a method for adjusting a display area of a page according to an embodiment of the present invention;

FIG. 2 is a flowchart of a method for adjusting a display area of a page according to another embodiment of the present invention;

FIG. 3 is a schematic diagram of adjusting a display area of a page according to another embodiment of the present invention;

FIG. 4 is a structural diagram of an apparatus for adjusting a display area of a page according to an embodiment of the present invention; and

FIG. 5 is a structural diagram of an apparatus for adjusting a display area of a page according to another embodiment of the present invention.

**DESCRIPTION OF EMBODIMENTS**

Embodiments of the present invention provide a method for adjusting a display area of a page, and a technical solution of adjusting a display area of a currently browsed page according to displacement of a mobile communication terminal is adopted, so that a user may adjust the display area of the page by moving the mobile communication terminal, so as to solve a problem of a method in the prior art that a mis-operation is easily caused. Embodiments of the present invention further provide a corresponding apparatus and a corresponding terminal. Detailed description is given in the following separately.

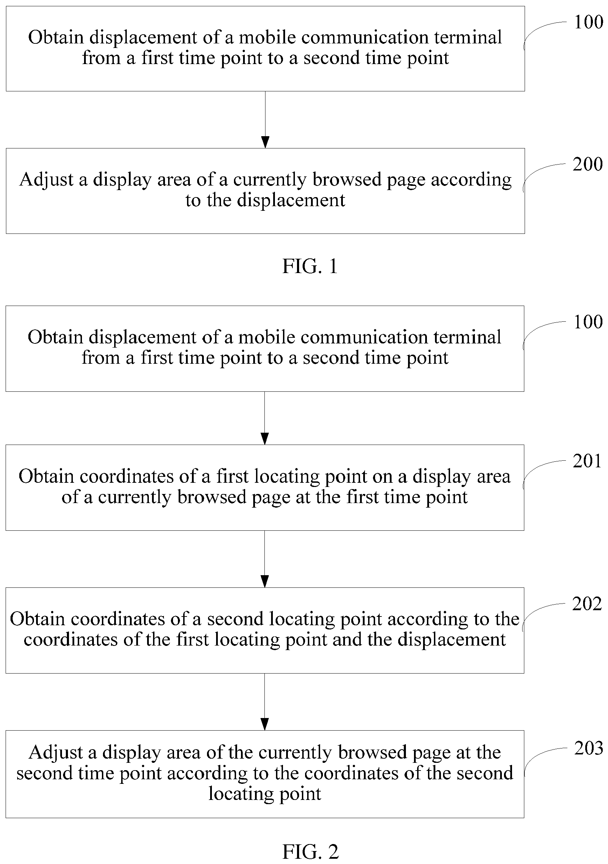

Referring to FIG. 1, an embodiment of the present invention provides a method for adjusting a display area of a page, where the method includes:

100: Obtain displacement of a mobile communication terminal from a first time point to a second time point.

In this embodiment, the displacement of the mobile communication terminal is obtained by using an acceleration sensor. The mentioned displacement is a vector, which not only represents a distance of a movement, but also represents a direction of the movement.

The acceleration sensor is a sensor capable of sensing acceleration and converting the acceleration to an available output signal, and the acceleration sensed by the acceleration sensor may be a constant, and may also be a variable. A working principle of the acceleration sensor is an inertia principle, that is, balance of force. According to a formula, acceleration (A) = inertia force (F)/mass (M), where the mass is known, and if the acceleration is wanted, it only needs to measure the inertia force. The inertia force is balanced by using electromagnetic force, so as to obtain correspondence between current magnitude and the inertia force. Therefore, the inertia force may be obtained by measuring a current, so as to further obtain the acceleration.

The acceleration sensor disposed inside the mobile communication terminal may detect acceleration of the mobile communication terminal between any two time points, for example, the first time point and the second time point, where the acceleration may be a constant, and may also be a variable. Then, according to a formula: displacement = speed x time = (acceleration x time) x time, on the basis of knowing the acceleration, an integral of the acceleration from the first time point to the second time point is calculated, so as to obtain the displacement of the mobile communication terminal from the first time point to the second time point.

An example is taken in the following for description:

It is assumed that acceleration of the mobile communication terminal from a first time point $t_0$ to a second time point $t_1$ is a.

Displacement S is an integral of a speed v relative to time t, and there is the following formula:

$$S = \int_{t0 \to t1} V dt$$

The speed v is an integral of the acceleration a relative to the time t, and there is the following formula:

$$v = \int_{t0 \to t1} a dt$$

The foregoing two formulas are combined, so as to obtain $S = \int_{t0 \to t1}(v_0 + \int_{t0 \to t1} a dt) dt$.

It is assumed that $v_0 = 0$, a relationship between the displacement s and the acceleration a is as follows:

$$S = \int_{t0 \to t1}(0 + \int_{t0 \to t1} a dt) dt = \int_{t0 \to t1}\int_{t0 \to t1} a dt$$

Therefore, on the basis that the acceleration sensor has known the acceleration, the integral of the acceleration from the first time point to the second time point is calculated, so as to obtain the displacement of the mobile communication terminal.

200: Adjust a display area of a currently browsed page according to the displacement.

The mentioned display area is an area which has a same size as that of a display screen of the mobile communication terminal and is on the currently browsed page, and may be entirely displayed on the display screen. After the displacement of the mobile communication terminal from the first time point to the second time point is obtained, a negative value of the displacement may be used as displacement for which the currently browsed page needs to be moved, and the page is moved relative to the display screen of the mobile communication terminal, so as to adjust the display area of the page. For example, the mobile communication terminal is moved to a left side for 3 centimeters, the currently browsed page may be moved to a right side relative to the display screen for 3 centimeters. The displacement for which the page is moved may be equal and may also be not equal to the displacement for which the mobile communication terminal is moved. In an implementation manner, conversion may be performed according to a preset proportion, for example, the displacement for which the page is moved may be a half or twice of the displacement for which the mobile communication terminal is moved, and so on.

The mentioned page may be electronic document pages of various formats, such as a web page, or a page of a portable document format (Portable Document Format, PDF) document, or a page of a Microsoft word processing program (Microsoft Word) document, or an e-mail page.

By adopting the method in the embodiment of the present invention, a user may adjust the display area of the currently browsed page by moving the mobile communication terminal, so as to solve a problem in the prior art that a mis-operation is easily caused when the display area of the page is adjusted in a manner of dragging on a touchscreen.

As shown in FIG. 2, in an embodiment, step 200 may specifically include:

> 201: Obtain coordinates of a first locating point of a display area of the currently browsed page at the first time point.

The mentioned locating point is a point which coincides with a display origin point of the display screen and is on the currently browsed page. The mentioned display origin point may be a pre-defined point on the display screen, for example, a central point or a vertex of the display screen, and certainly, may also be a point of any other position. The display area at the first time point is an area of the currently browsed page displayed on the display screen at the first time point. Therefore, the display area and the locating point have unique correspondence, the locating point may be determined according to the display area, and the display area may also be determined according to the locating point. At any time point, a point which coincides with the display origin point of the display screen and is on a current display area is a locating point corresponding to the time point. An example is taken for description with reference to an accompanying drawing in the following.

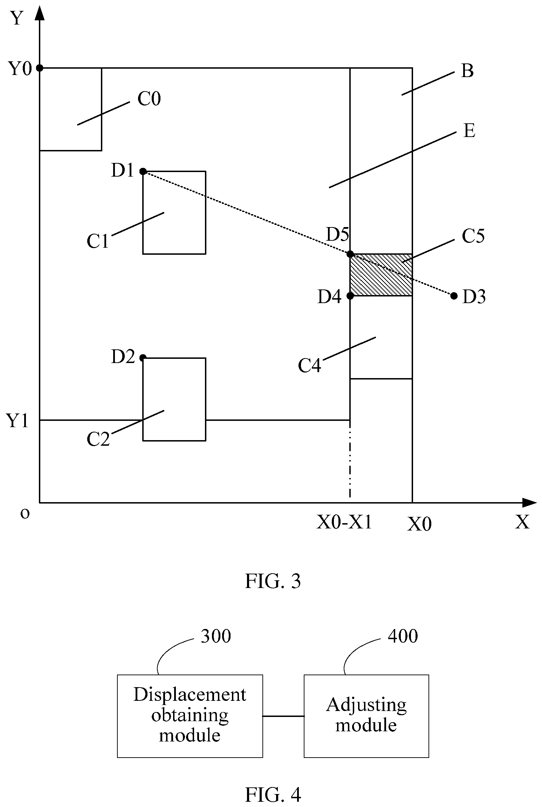

As shown in FIG. 3, it is assumed that in a plane rectangular coordinate system, a left lower corner of a page B is used as an origin point O, a lower border of the page B is used as an X axis, a left border of the page B is used as a Y axis, any point on the page has unique coordinates belonging to the coordinate system XOY. It is assumed that the display origin point of the display screen is a vertex of a left upper corner of the display screen, a vertex of a left upper corner of the current display area is a current locating point. If a vertex of a left upper corner of the page B is used as an initial locating point, when the mobile communication terminal opens the page, the initial locating point is located at the left upper corner of the display screen, so that an area C0 on the most left upper corner of the page is displayed, where the area C0 is a display area using the initial locating point as a vertex of a left upper corner and using a size of the display screen as the size. It is assumed that at the first time point, the display area of the currently browsed page is C1, the current locating point is the vertex D1 of the left upper corner of the display area C1, and the current locating point is marked as the first locating point. Before adjusting the display area of the page, the mobile communication terminal first obtains the coordinates of the first locating point.

202: Obtain coordinates of a second locating point according to the coordinates of the first locating point and the displacement.

A vector sum operation is performed on the negative value of the obtained displacement from the first time point to the second time point and the obtained coordinates of the first locating point, that is, the displacement is subtracted from the coordinates of the first locating point, so as to obtain the coordinates of the second locating point of a display area which should be displayed on the currently browsed page at the second time point. The step may specifically be:

202a: Determine whether new coordinates obtained by subtracting the displacement from the coordinates of the first locating point exceed a locating point coordinate permitted range of the currently browsed page.

The locating point coordinate permitted range is a range which is slightly smaller than the page and is on the page, and a locating point can only be determined within the range. In the following, as shown in FIG. 3, it is described how to determine borders of the locating point coordinate permitted range: It is assumed that a height of the page B is $Y0$, a width of the page B is $X0$, a height of the display screen is $Y1$, a width of the display screen is $X1$, and the vertex of the left upper corner of the display area of the page is used as the initial locating point, the locating point coordinate permitted range of the currently browsed page is shown in an area E in FIG. 3, and four vertexes of the area E are $(0, Y1)$, $(X0-X1, Y1)$, $(X0-X1, Y0)$, and $(0, Y0)$ respectively. Then, by determining whether the new coordinates obtained by subtracting the displacement from the coordinates of the first locating point exceed the locating point coordinate permitted range, it is decided how to determine the coordinates of the second locating point.

202b: If the new coordinates do not exceed the locating point coordinate permitted range, the new coordinates are used as the coordinates of the second locating point.

As shown in FIG. 3, the new coordinates are D2 within the locating point coordinate permitted range, so that D2 is directly used as the second locating point.

202c: If the new coordinates exceed the locating point coordinate permitted range, coordinates are additionally determined as the coordinates of the second locating point.

If the new coordinates exceed the locating point coordinate permitted range, obviously, the new coordinates cannot be used as the coordinates of the second locating point, and in this embodiment, it is allowed to preset various policies to determine the coordinates of the second locating point.

In one policy, coordinates which are closest to the new coordinates and are within the locating point coordinate permitted range is used as the coordinates of the second locating point. As shown in FIG. 3, the new coordinates are D3 out of the locating point coordinate permitted range, and coordinates D4 which are closest to D3 and are within the locating point coordinate permitted range is used as the coordinates of the second locating point.

In another policy, coordinates of an intersection point of a connection line of the new coordinates and the coordinates of the first locating point and a border of the locating point coordinate permitted range are obtained, and the coordinates of the intersection point is used as the coordinates of the second locating point. As shown in FIG. 3, the new coordinates are D3 out of the locating point coordinate permitted range, an intersection point of a connection line of D3 and D1 and the border of the locating point coordinate permitted range is D5, and coordinates of D5 may be used as the coordinates of the second locating point.

203: Adjust the display area of the currently browsed page at the second time point according to the coordinates of the second locating point.

The step is specifically that: A position which is represented by the coordinates of the second locating point and is on the currently browsed page is placed at the display origin point of the display screen, so as to implement adjusting the display area of the currently browsed page at the second time point.

It is assumed that the display origin point of the display screen is the vertex of the left upper corner of the display screen, the display area of the currently browsed page at the second time point is an area which extends from the vertex of the left upper corner of the second locating point, is on the currently browsed page, and has a same size as that of the display screen, such as the area C0, C1, C2, C4, or C5 shown in FIG. 3, and the area is completely displayed on the display screen.

It should be noted that, in other embodiments, the display origin point of the display screen may be defined according to other manners, for example, the central point of the display screen is defined as the display origin point, and so on. Correspondingly, the locating point may also be a central point of the display area.

To sum up, in this embodiment, by defining a coordinate system, coordinates of a locating point corresponding to each time point may be calculated according to obtained displacement of the mobile communication terminal between two time points, and then a display area is determined according to the coordinates of the locating point.

Referring to FIG. 4, an embodiment of the present invention further provides an apparatus for adjusting a display area of a page, where the apparatus includes:

a displacement obtaining module 300, configured to obtain displacement of a mobile communication terminal from a first time point to a second time point; and

an adjusting module 400, configured to adjust a display area of a currently browsed page according to the displacement.

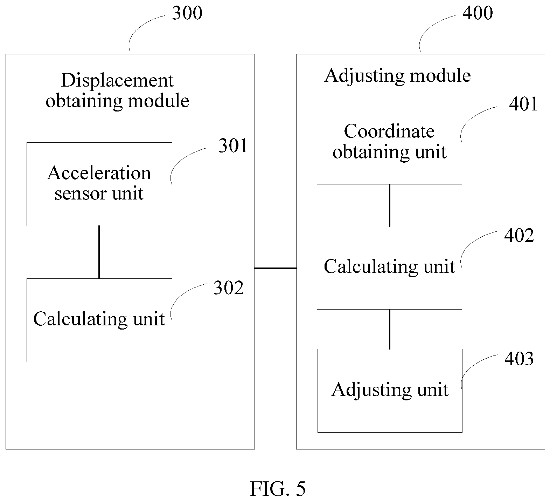

As shown in FIG. 5, in another embodiment:

The displacement obtaining module 300 may further include:

an acceleration sensor unit 301, configured to detect acceleration of the mobile communication terminal from the first time point to the second time point; and

a calculating unit 302, configured to perform an integral calculation on the acceleration, to obtain the displacement of the mobile communication terminal from the first time point to the second time point.

The adjusting module 400 may further include:

a coordinate obtaining unit 401, configured to obtain coordinates of a first locating point on a display area of the currently browsed page at the first time point;

a calculating unit 402, configured to obtain coordinates of a second locating point according to the coordinates of the first locating point and the displacement; and

an adjusting unit 403, configured to adjust a display area of the currently browsed page at the second time point according to the coordinates of the second locating point.

The calculating unit 402 may further include:

a determining unit 402a, configured to determine whether new coordinates obtained by subtracting the displacement from the coordinates of the first locating point exceed a locating point coordinate permitted range of the currently browsed page;

a first calculating unit 402b, configured to, if the determining unit determines that the new coordinates do not exceed the locating point coordinate permitted range, use the new coordinates as the coordinates of the second locating point; and

a second calculating unit 402c, configured to, if the determining unit determines that the new coordinates exceed the locating point coordinate permitted range, additionally determine coordinates as the coordinates of the second locating point.

Further, the second calculating unit 402c may specifically be configured to, if the determining unit determines that the new coordinates exceed the locating point coordinate permitted range, use coordinates which are closest to the new coordinates and are within the locating point coordinate permitted range as the coordinates of the second locating point; or obtain coordinates of an intersection point of a connection line of the new coordinates and the coordinates of the first locating point and a border of the locating point coordinate permitted range, and use the coordinates of the intersection point as the coordinates of the second locating point.

By adopting the apparatus in the embodiment of the present invention in the mobile communication terminal, a user may adjust the display area of the page through the mobile communication terminal, so as to solve a problem in the prior art that a mis-operation is easily caused when the display area of the page is adjusted in a manner of dragging on a touchscreen.

An embodiment of the present invention further provides a mobile communication terminal, where the mobile communication terminal includes a display screen and the apparatus for adjusting a display area of a page provided by the foregoing embodiment.

The mobile communication terminal may be a cell phone, an MP3, an MP4, a man-machine interaction terminal, an electronic book, or other terminal devices having a display function. In a case that the mobile communication terminal is a cell phone, the cell phone further includes: a display screen, a radio frequency circuit, a power supply circuit, and so on; where the display screen is configured to display page content; the radio frequency circuit is configured to establish communication between the cell phone and a wireless network, thereby implementing data receiving and sending between the cell phone and the wireless network, for example, requesting page content; and the power supply circuit is configured to supply power to each circuit or component of the cell phone.

Persons of ordinary skill in the art should understand that all or a part of the steps of various methods in the foregoing embodiments may be implemented by a program instructing relevant hardware. The program may be stored in a computer readable storage medium, and the storage medium may include a memory, a magnetic disk, or an optical disk, or the like.

The method, the apparatus, and the terminal for adjusting a display area of a page provided by the embodiments of the present invention are described in detail in the foregoing. The principle and implementation manners of the present invention are described herein by applying specific examples. The description about the foregoing embodiments is merely provided for ease of understanding of the method and core ideas of the present invention, and shall not be construed as a limitation to the present invention.

**Claims**

1. A method for adjusting a display area of a page, comprising:

   obtaining (100) displacement of a mobile communication terminal from a first time point to a second time point, wherein the displacement of the mobile terminal is obtained by using an acceleration sensor;
   obtaining (201) coordinates of a first locating point on a display area of the currently browsed page at the first time point;
   obtaining (202) coordinates of a second locating point according to the coordinates of the first locating point and the displacement;
   adjusting (203) a display area of the currently browsed page at the second time point according to the coordinates of the second locating point, wherein the display area is displayed on a display screen of the mobile communication terminal;
   wherein the obtaining coordinates of a second locating point according to the coordinates of the first locating point and the displacement comprises:

      determining (202a) whether new coordinates obtained by subtracting the displacement from the coordinates of the first locating point exceed a locating point coordinate permitted range of the currently browsed page, if not, using (202b) the new coordinates as the coordinates of the second locating point; and if yes, additionally determining (202c) coordinates as the coordinates of the second locating point;
      wherein the additionally determining coordinates as the coordinates of the second locating point comprises:

         using coordinates which are closest to the new coordinates and are within the locating point coordinate permitted range as the coordinates of the second locating point; or

         obtaining coordinates of an intersection point of a connection line of the new coordinates and the coordinates of the first locating point and a border of the locating point coordinate permitted range, and using the coordinates of the intersection point as the coordinates of the second locating point;
   wherein the first locating point is a point which coincides with a display origin point of a display screen and is on the display area of the currently browsed page at the first time point;
   wherein the adjusting a display area of the currently browsed page at the second time point according to the coordinates of the second locating point comprises:

      placing a position which is represented by the coordinates of the second locating point and is on the currently browsed page at the display origin point of the display screen, so as to implement adjusting the display area of the currently browsed page at the second time point.

2. The method according to claim 1, wherein the obtaining displacement of a mobile communication terminal from a first time point to a second time point comprises:

   detecting acceleration of the mobile communication terminal from the first time point to the second time point; and
   performing an integral calculation on the acceleration, to obtain the displacement of the mobile communication terminal from the first time point to the second time point.

3. An apparatus for adjusting a display area of a page, comprising:

   a displacement obtaining module (300), configured to obtain displacement of a mobile communication terminal from a first time point to a second time point; and
   an adjusting module (400), configured to adjust a display area of a currently browsed page according to the displacement;
   wherein the adjusting module comprises: a coordinate obtaining unit (401), configured to obtain coordinates of a first locating point on a display area of the currently browsed page at the first time point;
   a calculating unit (402), configured to obtain coordinates of a second locating point according to the coordinates of the first locating point and the displacement;

an adjusting unit (403), configured to adjust a display area of the currently browsed page at the second time point according to the coordinates of the second locating point, wherein the display area is displayed on a display screen of the mobile communication terminal;

wherein the calculating unit further comprises: a determining unit (402a), configured to determine whether new coordinates obtained by subtracting the displacement from the coordinates of the first locating point exceed a locating point coordinate permitted range of the currently browsed page;

a first calculating unit (402b), configured to, if the determining unit determines that the new coordinates do not exceed the locating point coordinate permitted range, use the new coordinates as the coordinates of the second locating point; and

a second calculating unit (402c), configured to, if the determining unit determines that the new coordinates exceed the locating point coordinate permitted range, additionally determine coordinates as the coordinates of the second locating point;

the second calculating unit is specifically configured to, if the determining unit determines that the new coordinates exceed the locating point coordinate permitted range, use coordinates which are closest to the new coordinates and are within the locating point coordinate permitted range as the coordinates of the second locating point; or obtain coordinates of an intersection point of a connection line of the new coordinates and the coordinates of the first locating point and a border of the locating point coordinate permitted range, and use the coordinates of the intersection point as the coordinates of the second locating point.

4. The apparatus according to claim 3, wherein the displacement obtaining module comprises:

an acceleration sensor unit (301), configured to detect acceleration of the mobile communication terminal from the first time point to the second time point; and

a calculating unit (302), configured to perform an integral calculation on the acceleration, to obtain the displacement of the mobile communication terminal from the first time point to the second time point.

5. A mobile communication terminal, comprising a display screen and the apparatus for adjusting a display area of a page according to any one of claims 3 to 4.

**Patentansprüche**

1. Verfahren zum Einstellen eines Anzeigebereichs einer Seite, umfassend:

Erhalten (100) einer Verlagerung eines mobilen Kommunikationsendgeräts von einem ersten Zeitpunkt zu einem zweiten Zeitpunkt, wobei die Verlagerung des Mobilfunkendgeräts erhalten wird, indem ein Beschleunigungssensor verwendet wird;

Erhalten (201) von Koordinaten eines ersten Ortungspunkts in einem Anzeigebereich der aktuell durchblätterten Seite zum ersten Zeitpunkt;

Erhalten (202) von Koordinaten eines zweiten Ortungspunkts gemäß den Koordinaten des ersten Ortungspunkts und gemäß der Verlagerung;

Einstellen (203) eines Anzeigebereichs der aktuell durchblätterten Seite zum zweiten Zeitpunkt gemäß den Koordinaten des zweiten Ortungspunkts, wobei der Anzeigebereich auf einem Anzeigebildschirm des mobilen Kommunikationsendgeräts angezeigt wird;

wobei das Erhalten von Koordinaten eines zweiten Ortungspunkts gemäß den Koordinaten des ersten Ortungspunkts und gemäß der Verlagerung umfasst:

Ermitteln (202a), ob neue Koordinaten, die durch das Subtrahieren der Verlagerung von den Koordinaten des ersten Ortungspunkts erhalten werden, einen erlaubten Bereich von Ortungspunktkoordinaten der aktuell durchblätterten Seite überschreiten, falls nicht, Verwenden (202b) der neuen Koordinaten als die Koordinaten des zweiten Ortungspunkts; und falls ja, zusätzliches Ermitteln (202c) von Koordinaten als die Koordinaten des zweiten Ortungspunkts;

wobei das zusätzliche Ermitteln von Koordinaten als die Koordinaten des zweiten Ortungspunkts umfasst:

Verwenden von Koordinaten als die Koordinaten des zweiten Ortungspunkts, die am nächsten zu den neuen Koordinaten und innerhalb des erlaubten Bereichs von Ortungspunktkoordinaten liegen; oder

Erhalten von Koordinaten eines Schnittpunkts einer Verbindungslinie zwischen den neuen Koordinaten und den Koordinaten des ersten Ortungspunkts mit einer Grenze des erlaubten Bereichs von Ortungspunktkoordinaten, und Verwenden der Koordinaten des Schnittpunkts als die Koordinaten des zweiten Ortungspunkts;

wobei der erste Ortungspunkt ein Punkt ist, der mit einem Anzeigeursprungspunkt eines Anzeigebildschirms übereinstimmt und der zum ersten Zeitpunkt in dem Anzeigebereich der aktuell durchblätterten Seite liegt;

wobei das Einstellen eines Anzeigebereichs der aktuell durchblätterten Seite zum zweiten Zeitpunkt gemäß den Koordinaten des zweiten Ortungspunkts umfasst:

Platzieren einer Position, die durch die Koordinaten des zweiten Ortungspunkts dargestellt wird und die an dem Anzeigeursprungspunkt des Anzeigebildschirms der aktuell durchblätterten Seite liegt, sodass das Einstellen des Anzeigebereichs der aktuell durchblätterten Seite zum zweiten Zeitpunkt umgesetzt wird.

2. Verfahren nach Anspruch 1, wobei das Erhalten einer Verlagerung eines mobilen Kommunikationsendgeräts von einem ersten Zeitpunkt zu einem zweiten Zeitpunkt umfasst:

Erfassen einer Beschleunigung des mobilen Kommunikationsendgeräts von dem ersten Zeitpunkt zu dem zweiten Zeitpunkt; und Ausführen einer Integralberechnung auf der Beschleunigung, um die Verlagerung des mobilen Kommunikationsendgeräts von dem ersten Zeitpunkt zu dem zweiten Zeitpunkt zu erhalten.

3. Vorrichtung zum Einstellen eines Anzeigebereichs einer Seite, umfassend:

ein Modul zum Erhalten einer Verlagerung (300), das konfiguriert ist, um eine Verlagerung eines mobilen Kommunikationsendgeräts von einem ersten Zeitpunkt zu einem zweiten Zeitpunkt zu erhalten; und
ein Einstellmodul (400), das konfiguriert ist, um einen Anzeigebereich einer aktuell durchblätterten Seite gemäß der Verlagerung einzustellen;
wobei das Einstellmodul umfasst: eine Einheit zum Erhalten von Koordinaten (401), die konfiguriert ist, um Koordinaten eines ersten Ortungspunkts in einem Anzeigebereich der aktuell durchblätterten Seite zum ersten Zeitpunkt zu erhalten;
eine Berechnungseinheit (402), die konfiguriert ist, um Koordinaten eines zweiten Ortungspunkts gemäß den Koordinaten des ersten Ortungspunkts und gemäß der Verlagerung zu erhalten;

eine Einstelleinheit (403), die konfiguriert ist, um einen Anzeigebereich der aktuell durchblätterten Seite zum zweiten Zeitpunkt gemäß den Koordinaten des zweiten Ortungspunkts einzustellen, wobei der Anzeigebereich auf einem Anzeigebildschirm des mobilen Kommunikationsendgeräts angezeigt wird;

wobei die Berechnungseinheit außerdem umfasst: eine Ermittlungseinheit (402a), die konfiguriert ist, um zu ermitteln, ob neue Koordinaten, die durch das Subtrahieren der Verlagerung von den Koordinaten des ersten Ortungspunkts erhalten werden, einen erlaubten Bereich von Ortungspunktkoordinaten der aktuell durchblätterten Seite überschreiten;

eine erste Berechnungseinheit (402b), die konfiguriert ist, um, wenn die Ermittlungseinheit ermittelt, dass die neuen Koordinaten den erlaubten Bereich von Ortungspunktkoordinaten nicht überschreiten, die neuen Koordinaten als die Koordinaten des zweiten Ortungspunkts zu verwenden; und

eine zweite Berechnungseinheit (402c), die konfiguriert ist, um, wenn die Ermittlungseinheit ermittelt, dass die neuen Koordinaten den erlaubten Bereich von Ortungspunktkoordinaten überschreiten, zusätzliche Koordinaten als die Koordinaten des zweiten Ortungspunkts zu ermitteln;

wobei die zweite Berechnungseinheit insbesondere konfiguriert ist, um, wenn die Ermittlungseinheit ermittelt, dass die neuen Koordinaten den erlaubten Bereich von Ortungspunktkoordinaten überschreiten, Koordinaten als die Koordinaten des zweiten Ortungspunkts zu verwenden, die am nächsten zu den neuen Koordinaten und innerhalb des erlaubten Bereichs von Ortungspunktkoordinaten liegen; oder um Koordinaten eines Schnittpunkts einer Verbindungslinie zwischen den neuen Koordinaten und den Koordinaten des ersten Ortungspunkts mit einer Grenze des erlaubten Bereichs von Ortungspunktkoordinaten zu erhalten, und die Koordinaten des Schnittpunkts als die Koordinaten des zweiten Ortungspunkts zu verwenden.

4. Vorrichtung nach Anspruch 3, wobei das Modul zum Erhalten einer Verlagerung umfasst:

eine Beschleunigungssensoreinheit (301), die konfiguriert ist, um eine Beschleunigung des mobilen Kommunikationsendgeräts von dem ersten Zeitpunkt zu dem zweiten Zeitpunkt zu erfassen; und

eine Berechnungseinheit (302), die konfiguriert ist, um eine Integralberechnung auf der Beschleunigung auszuführen, um die Verlagerung des mobilen Kommunikationsendgeräts von dem ersten Zeitpunkt zu dem zweiten Zeitpunkt zu erhalten.

5. Mobiles Kommunikationsendgerät, das einen Anzeigebildschirm und die Vorrichtung zum Einstellen eines Anzeigebereichs einer Seite nach einem der Ansprüche 3 bis 4 umfasst.

## Revendications

1. Procédé pour ajuster une zone d'affichage d'une page, comprenant les étapes suivantes :

obtenir (100) un déplacement d'un terminal de communication mobile d'un premier point dans le temps à un second point dans le temps, où le déplacement du terminal mobile est obtenu en utilisant un capteur d'accélération ;
obtenir (201) les coordonnées d'un premier point de localisation sur une zone d'affichage de la page actuellement parcourue au premier point dans le temps ;
obtenir (202) les coordonnées d'un second point de localisation selon les coordonnées du premier point de localisation et le déplacement ;
ajuster (203) une zone d'affichage de la page actuellement parcourue au second point dans le temps selon les coordonnées du second point de localisation, où la zone d'affichage est affichée sur un écran d'affichage du terminal de communication mobile ;
où obtenir les coordonnées d'un second point de localisation selon les coordonnées du premier point de localisation et le déplacement comprend les étapes suivantes :

déterminer (202a) si de nouvelles coordonnées obtenues en soustrayant le déplacement des coordonnées du premier point de localisation dépassent une plage autorisée de coordonnées du point de localisation de la page actuellement parcourue ; si tel n'est pas le cas, utiliser (202b) les nouvelles coordonnées comme coordonnées du second point de localisation ; et si tel est le cas, déterminer en outre (202c) les coordonnées comme coordonnées du second point de localisation ;
où la détermination additionnelle des coordonnées comme coordonnées du second point de localisation comprend les étapes suivantes :

utiliser les coordonnées qui sont les plus proches des nouvelles coordonnées et qui se situent dans la plage autorisée de coordonnées du point de localisation comme coordonnées du second point de localisation ; ou
obtenir les coordonnées d'un point d'intersection d'une ligne de connexion des nouvelles coordonnées et des coordonnées du premier point de localisation et d'une bordure de la plage autorisée de coordonnées du point de localisation, et utiliser les coordonnées du point d'intersection comme coordonnées du second point de localisation ;
où le premier point de localisation est un point qui coïncide avec un point d'origine d'affichage d'un écran d'affichage et se trouve sur la zone d'affichage de la page actuellement parcourue au premier point dans le temps ;
où l'ajustement d'une zone d'affichage de la page actuellement parcourue au second point dans le temps aux coordonnées du second point de localisation comprend l'étape suivante :

placer une position qui est représentée par les coordonnées du second point de localisation et qui se situe sur la page actuellement parcourue au point d'origine d'affichage de l'écran d'affichage, de manière à mettre en oeuvre un ajustement de la zone d'affichage de la page actuellement parcourue au second point dans le temps.

2. Procédé selon la revendication 1, dans lequel l'obtention du déplacement d'un terminal de communication mobile d'un premier point dans le temps à un second point dans le temps comprend les étapes suivantes :

détecter l'accélération du terminal de communication mobile du premier point dans le temps au second point dans le temps ; et
procéder à un calcul intégral sur l'accélération, pour obtenir le déplacement du terminal de communication mobile du premier point dans le temps au second point dans le temps.

3. Appareil pour ajuster une zone d'affichage d'une page, comprenant :

un module d'obtention de déplacement (300), configuré pour obtenir le déplacement d'un terminal de communication mobile d'un premier point dans le temps à un second point dans le temps ; et

un module d'ajustement (400), configuré pour ajuster une zone d'affichage d'une page actuellement parcourue selon le déplacement ;

où le module d'ajustement comprend : une unité d'obtention de coordonnées (401) configurée pour obtenir des coordonnées d'un premier point de localisation sur une zone d'affichage de la page actuellement parcourue au premier point dans le temps ;

une unité de calcul (402), configurée pour obtenir les coordonnées d'un second point de localisation selon les coordonnées du premier point de localisation et le déplacement ;

une unité d'ajustement (403), configurée pour ajuster une zone d'affichage de la page actuellement parcourue au second point dans le temps selon les coordonnées du second point de localisation, où la zone d'affichage est affichée sur un écran d'affichage du terminal de communication mobile ;

où l'unité de calcul comprend en outre : une unité de détermination (402a), configurée pour déterminer si de nouvelles coordonnées obtenues en soustrayant le déplacement des coordonnées du premier point de localisation dépassent une plage autorisée de coordonnées du point de localisation de la page actuellement parcourue ;

une première unité de calcul (402b), configurée pour, si l'unité de détermination détermine que les nouvelles coordonnées ne dépassent pas la plage autorisée de coordonnées du point de localisation, utiliser les nouvelles coordonnées comme coordonnées du second point de localisation ; et

une seconde unité de calcul (402c), configurée pour, si l'unité de détermination détermine que les nouvelles coordonnées dépassent la plage autorisée de coordonnées du point de localisation, déterminer en outre les coordonnées comme coordonnées du second point de localisation ;

la seconde unité de calcul est spécifiquement configurée pour, si l'unité de détermination détermine que les nouvelles coordonnées dépassent la plage autorisée de coordonnées du point de localisation, utiliser les coordonnées qui sont les plus proches des nouvelles coordonnées et se situent dans la plage autorisée de coordonnées du point de localisation comme coordonnées du second point de localisation ; ou obtenir les coordonnées d'un point d'intersection d'une ligne de connexion des nouvelles coordonnées et des coordonnées du premier point de localisation et d'une bordure de la plage autorisée de coordonnées du point de localisation, et utiliser les coordonnées du point d'intersection comme coordonnées du second point de localisation.

4. Appareil selon la revendication 3, dans lequel le module d'obtention de déplacement comprend :

une unité de capteur d'accélération (301), configurée pour détecter l'accélération du terminal de communication mobile du premier point dans le temps au second point dans le temps ; et

une unité de calcul (302), configurée pour procéder à un calcul intégral sur l'accélération, pour obtenir le déplacement du terminal de communication mobile du premier point dans le temps au second point dans le temps.

5. Terminal de communication mobile, comprenant un écran d'affichage et l'appareil pour ajuster une zone d'affichage d'une page selon l'une quelconque des revendications 3 et 4.

Obtain displacement of a mobile communication terminal from a first time point to a second time point — 100

Adjust a display area of a currently browsed page according to the displacement — 200

FIG. 1

Obtain displacement of a mobile communication terminal from a first time point to a second time point — 100

Obtain coordinates of a first locating point on a display area of a currently browsed page at the first time point — 201

Obtain coordinates of a second locating point according to the coordinates of the first locating point and the displacement — 202

Adjust a display area of the currently browsed page at the second time point according to the coordinates of the second locating point — 203

FIG. 2

FIG. 3

FIG. 4

300

400

| Displacement obtaining module |
|---|

| Acceleration sensor unit | 301 |

| Calculating unit | 302 |

| Adjusting module |
|---|

| Coordinate obtaining unit | 401 |

| Calculating unit | 402 |

| Adjusting unit | 403 |

FIG. 5

**EP 2 717 139 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011102455 A1
- US 2009089705 A1
- US 20070211041 A1